(19) Europäisches Patentamt
European Patent Office
Office européen des brevets

(11) **EP 4 711 820 A1**

(12) **EUROPEAN PATENT APPLICATION**

(43) Date of publication:
**18.03.2026 Bulletin 2026/12**

(21) Application number: **24200273.1**

(22) Date of filing: **13.09.2024**

(51) International Patent Classification (IPC):
**G01S 19/30** (2010.01) **G01S 19/34** (2010.01)

(52) Cooperative Patent Classification (CPC):
**G01S 19/34; G01S 19/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **u-blox AG**
**8800 Thalwil (CH)**

(72) Inventors:
• **Hartmeier, Thomas**
**8800 Thalwil (CH)**
• **Lluis Garcia, Robert**
**8800 Thalwil (CH)**
• **Dumphart, Gregor**
**8800 Thalwil (CH)**

(74) Representative: **Epping - Hermann - Fischer Patentanwaltsgesellschaft mbH**
**Schloßschmidstraße 5**
**80639 München (DE)**

(54) **METHOD FOR ESTIMATING DELAYS AND DOPPLER SHIFTS OF GLOBAL NAVIGATION SATELLITE SYSTEM SIGNALS**

(57)     A method for estimating delays and Doppler shifts of GNSS signals comprises obtaining respective output sequences from $N$ correlators for a snapshot of a received GNSS signal, wherein each sequence has $K$ values, the $N$ correlators correspond to $N$ different delays of a pseudorandom noise, PRN, code sequence, the $K$ values are correlation values at $K$ sampling time points in each sequence, $N$ and $K$ are positive integers. The method further comprises, for each output sequence, obtaining a frequency spectrum by computing a $K$-point discrete Fourier transform, DFT, of the output sequence; obtaining a $N \times K$ matrix using the $N$ frequency spectra; determining at least one peak value in the $N \times K$ matrix; and estimating a delay and a Doppler shift of the received GNSS signal using indices of the at least one peak value in the $N \times K$ matrix.

**Fig 1**

**Description**

TECHNICAL FIELD

This disclosure relates to a method for estimating delays and Doppler shifts of global navigation satellite system, GNSS, signals. The disclosure further relates to a module and a terminal device.

BACKGROUND ART

GNSS receivers are widely used with terminal devices to provide positioning information for the terminal devices, such as positions, velocities and navigation, etc. GNSS receivers receive GNSS signals from multiple satellites. By processing GNSS signals, GNSS receivers estimate positions, velocities and time, and may further provide navigation for terminal devices.

In a conventional GNSS receiver, GNSS signals are received by a radio frequency, RF, front end and down-converted to intermediate frequency, IF, by a down-converter. The analog IF signals are converted to digital IF signals by an analog-to-digital, A/D, converter. The digital signals are processed in various signal processing procedures to estimate positions, velocities and time, etc. In conventional signal processing procedures, signal search and signal acquisition are initially performed. Coarse estimation of delays and Doppler shifts of GNSS signals is obtained after signal acquisition. Subsequently, signal tracking is performed to obtain fine estimation of delays and Doppler shifts. For signal tracking, closed tracking loops such as delay-locked loops, DLL, phase-locked-loops, PLL, and frequency-locked loops, FLL, are widely used to continuously update the fine estimation. The fine estimation of delays and Doppler shifts can be further used to estimate pseudoranges, positions, velocities, etc. More accurate fine estimation of delays and Doppler shifts would result in more accurate positions, etc.

When receiving GNSS signals, the RF front end of a GNSS receiver may take snapshots of received signals. A snapshot may be taken from a GNSS signal received during a certain period of time. In such implementations, subsequent processing in the GNSS receiver may be carried out upon the snapshots. However, for signal tracking, continuous snapshots are required by tracking loops to output accurate estimation of delays and Doppler shifts. If in some scenarios, e.g., in a power saving scenario, snapshots are not continuously provided, tracking loops cannot be used effectively to output accurate estimation.

Therefore, for a conventional GNSS receiver, it remains challenging to obtain accurate estimation of delays and Doppler shifts with non-continuous snapshots.

SUMMARY OF INVENTION

An object to be achieved is to provide an improved processing concept for providing accurate estimation of delays and Doppler shifts with non-continuous snapshots of GNSS signals.

This object is achieved with the subject-matter of the independent claims. Embodiments and developments derive from the dependent claims.

According to the present disclosure, a GNSS receiver takes and processes snapshots of a GNSS signal. A snapshot is taken from a GNSS signal received during a period of time, e.g., tens or hundreds of milliseconds. Signal acquisition can be performed using snapshots of a GNSS signal. After the GNSS signal is acquired, a coarse estimation, such as a coarse range of delays and Doppler shifts of the GNSS signal, is obtained. For example, delays are code phases in pseudorandom noise, PRN, code sequences. A coarse range of delays obtained after signal acquisition may be around $\pm 1$ chip duration of a GNSS signal, e.g., $\pm 1\mu$s. Pseudoranges calculated using such delays may range between hundreds of meters, e.g., $\pm 150$ meters for a GPS L1 system. Thus, the snapshots are further processed to obtain finer and more accurate estimation of delays. For signal tracking, snapshots may not be continuously available, e.g., due to power saving. Tracking loops cannot properly track phase and frequency of the GNSS signal, and thus cannot effectively estimate delays and Doppler shifts of the signal.

The improved processing concept is based on the idea that, after signal acquisition, individual snapshots rather than continuous snapshots are processed for estimating delays and Doppler shifts. Correlations of a snapshot with different delays are converted to frequency spectra, a delay and a Doppler shift are estimated based on values in the frequency spectra. The estimated delays and Doppler shifts are accurate and can be used to calculate accurate pseudoranges and positions. For example, the estimated delays and Doppler shifts are more accurate than the coarse estimation in the signal acquisition. The estimated Doppler shifts may be obtained within a window of $\pm 4$ Hz, and the estimated delays may be obtained within a window of $\pm 0.5$ chip duration, which may be roughly $\pm 146$ ns. Accurate pseudoranges can be calculated using the estimated delays. For example, a window of calculated pseudoranges may be $\pm 9$ meters in a GPS L1 system, or $\pm 2$ meters in a GPS L5 system.

By means of the improved processing concept, conventional closed tracking loops such as DLL, FLL and PLL are not required while accurate estimation of delays and Doppler shifts can be achieved. A GNSS receiver can operate effectively with individual and non-continuous snapshots of GNSS signals, e.g., during power saving. Accurate positions and navigation can be further achieved using the estimated delays and Doppler shifts. The solution is computationally efficient and can be implemented at least partially in software environment at a lower cost than completely in hardware environment.

According to the present disclosure, the method for estimating delays and Doppler shifts of GNSS signals comprises obtaining respective output sequences from $N$ correlators for a snapshot of a received GNSS signal, wherein each sequence has $K$ values, the $N$ correlators correspond to $N$ different delays of a PRN code sequence, the $K$ values of each sequence are correlation values at $K$ sampling time points output by each correlator, $N$ and $K$ are positive integers. For example, $N$ different delays of the PRN code sequence are used by $N$ correlators. $N$ may be equal to or greater than 2. For example, $N$ may be equal to or greater than 7. A greater number of $N$ improves accuracy of estimation in high dynamical scenarios, under multipath interference, or limited signal bandwidth scenarios. A greater number of $N$ may also allow faster convergence after signal acquisition and for avoiding problems with binary offset carrier, BOC, side peaks. The method further comprises, for each output sequence, obtaining a frequency spectrum by computing a $K$-point discrete Fourier transform, DFT, of the output sequence; obtaining a $N \times K$ matrix using the $N$ frequency spectra; determining at least one peak value in the $N \times K$ matrix; and estimating a delay and a Doppler shift of the received GNSS signal using indices of the at least one peak value in the $N \times K$ matrix. In this method, the $N \times K$ matrix has two dimensions. One of the two dimensions is a delay dimension in which indices correspond to the $N$ different delays. The other dimension is a Doppler shift dimension in which indices correspond to $K$ different Doppler shifts. The estimated delay and Doppler shift are interpolated values between the indices in the respective dimensions. Therefore, by using indices of peak values in the matrix, delays and Doppler shifts can be estimated. The estimation is accurate and comparable with that by conventional tracking loops using continuous snapshots.

In example implementations, the method can be performed by one or more modules in a GNSS receiver or in a terminal device with a GNSS receiver, etc. The method can be implemented in software module(s) and is computationally efficient.

In some implementations, the method further comprises selecting a reference value based on absolute values in the $N \times K$ matrix, wherein selecting the reference value comprises selecting a value as the reference value which has the largest absolute value in the $N \times K$ matrix, or alternatively, selecting the reference value comprises selecting a subset of values in the $N \times K$ matrix having absolute values higher than a threshold, and selecting the value as the reference value which corresponds to the smallest delay in the subset. The selected reference value represents the amplitude of a signal component in the line-of-sight, LOS, path. The reference value is a fast selection from the frequency spectra and can be further used to approach the accurate estimation of delays and Doppler shifts.

In some implementations, indices of values in the $N \times K$ matrix are denoted as $(n, k)$, $n \in [1, N]$, $k \in [1, K]$, and estimating the delay and the Doppler shift of the received GNSS signal using indices of at least one peak value in the $N \times K$ matrix comprises computing the delay by a code phase discriminator using a subset of values in the matrix, wherein the subset comprises the values having a same index $k$ of a reference value selected based on absolute values in the $N \times K$ matrix, and any code phase discriminator can be applied, comprising the early-late gate, a multigate discriminator such as the double-delta discriminator, any linear combination or nonlinear function of such discriminators, any zero-crossing interpolation between such discriminators evaluated at neighboring indices, the intersection point between a line through two early neighboring taps and a line through two late neighboring taps, or the peak coordinates of a fitted triangle or pulse shape or polynomial; and fitting a subset of values in the matrix to a polynomial curve or any other applicable spectrum template and computing the Doppler shift at a maximum of the curve, wherein the subset comprises the values having a same index $n$ of the reference value. The reference value can be selected by any one of the implementations described above. In these implementations, delays and Doppler shifts are estimated respectively while using the same reference value.

In some alternative implementations, estimating the delay and the Doppler shift of the received GNSS signal using indices of the at least one peak value in the $N \times K$ matrix comprises fitting partially or completely the values in the matrix to a graph in a delay dimension and a Doppler shift dimension using a two-dimensional fitting algorithm, and computing the delay and the Doppler shift at a peak in the graph. In these implementations, delays and Doppler shifts are estimated at a same time.

In some implementations, values in the $N$ frequency spectra are denoted as $z[n,k]$ and have in-phase and quadrature components, $n \in [1,N]$, $k \in [1,K]$, and obtaining the $N \times K$ matrix comprises computing a unit complex value $u$ of a reference value $z_{ref}$ selected based on absolute values in the $N \times K$ matrix, wherein $u$ is computed by

$$u = \frac{z_{ref}}{\left| z_{ref} \right|} \, ,$$

wherein $|z_{ref}|$ is an absolute value of $z_{ref}$, and converting each $z[n,k]$ to be the in-phase component of a multiplication of ($z[n,k]u*$), wherein $u*$ is a complex conjugate of the unit complex value $u$. The reference value can be selected by any one of the implementations described above. According to the method, before obtaining the $N \times K$ matrix, the $K$-point DFT of each output sequence is computed. The resulting $N$ frequency spectra contain $N \times K$ values and form an original $N \times K$ matrix. In these implementations, the values in the $N$ frequency spectra are complex values, i.e., having in-phase and quadrature components. It is considered that the selected reference value corresponds to the complex-valued amplitude of a LOS component in the GNSS signal. By the computation on the complex values in these implementations, phases of the complex values are adjusted by using the phase of the reference value, i.e., by using the unit complex value $u$. Non-line-of-sight, NLOS, components in the GNSS signal can be suppressed. Furthermore, this enlarges the linear region of the correlation function in the case of GNSS signals that use BOC modulation, thus alleviating problems the BOG correlation side peaks may cause during estimation.

By the above computation, the complex values in the original $N \times K$ matrix are adjusted and converted into real values. The real-valued $N \times K$ matrix is further used to estimate delays and Doppler shifts. By adjusting phases of values in the matrix, the accuracy of estimated delays and Doppler shifts can be further improved.

In some alternative implementations, obtaining the $N \times K$ matrix comprises converting the complex values in the $N$ frequency spectra into absolute values. The obtained $N \times K$ matrix is a real-valued matrix and can be further used to estimate delays and Doppler shifts.

In some implementations, obtaining the frequency spectrum for each output sequence comprises configuring twiddle factors and the number of frequency components for the discrete Fourier transform to adjust the frequency spectrum. By configuring the twiddle factors, a proper Doppler shift window to be considered in the estimation can be adjusted differently, for example, based on experience or based on different application scenarios. A reliable estimation of Doppler shifts can thus be ensured.

In some implementations, the method further comprises correcting parameters of a delay and a frequency of the received GNSS signal by using the estimated delay and the estimated Doppler shift and applying the parameters to a local oscillator and correlator hardware for tracking the GNSS signal. In this way, the obtained estimation is further used to improve the reception of GNSS signals.

In some implementations, the method further comprises performing by each correlator a correlation operation to generate the respective output sequence, wherein each value in the output sequence is computed by the correlation operation between the snapshot and the PRN code sequence with the correspondent delay of the correlator at a sampling time point. For example, each correlator uses $K$ sampling time points and thus each output sequence contains $K$ values of correlation.

In some implementations, the method further comprises taking snapshots of the received GNSS signal at predetermined time intervals. The snapshots are thus not continuous. The method processes each of the non-continuous snapshots, and the estimation of delays and Doppler shifts of a current snapshot does not rely on previous snapshots. The method thus allows GNSS receivers to reduce energy consumption and save power.

In some implementations, a Doppler shift window of $\pm a$ Hz and/or a delay window of $\pm b$ nanoseconds is considered for estimating the delay and the Doppler shift of the received GNSS signal, wherein $a$ is smaller than 1000, $b$ is smaller than 2000.

The present disclosure further provides a module for processing GNSS signals according to the improved processing concept. The module is configured to perform a method according to any one of the implementations described above.

The present disclosure further provides a terminal device comprising a module according to any one of the implementations described above.

According to one embodiment of the improved processing concept, a computer program product comprises instructions which, when executed on one or more processors of a device having a hardware module, cause the one or more processors to perform a method according to any one of the implementations described above.


BRIEF DESCRIPTION OF DRAWINGS

The improved processing concept will be explained in more detail in the following with the aid of the drawings. Elements and functional blocks having the same or similar function bear the same reference numerals throughout the drawings. Hence their description is not necessarily repeated in the following drawings.

In the drawings:

Figure 1    shows a flowchart of a method for estimating delays and Doppler shifts of GNSS signals;

Figure 2    shows an example sequence of correlation values; and

Figure 3     shows an example illustrating values in a two-dimensional matrix; and

Figure 4     shows an example of a module for estimating delays and Doppler shifts of GNSS signals.

## DETAILED DESCRIPTION

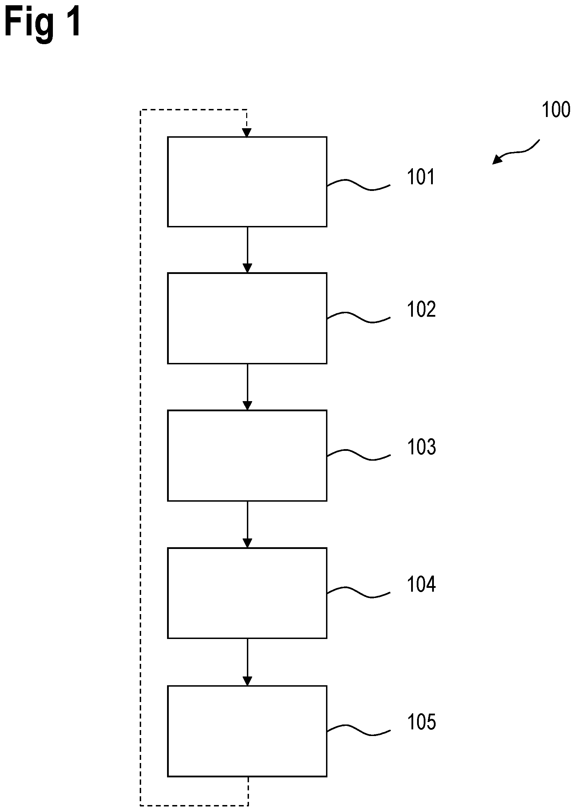

Figure 1 shows a flowchart of an example implementation of a method 100 for estimating delays and Doppler shifts of GNSS signals.

Method 100 may be performed by one or more modules in a device, such as a GNSS receiver or a terminal device with a GNSS receiver. In the following, a GNSS receiver is used as an example to perform the method.

For example, before step 101 of method 100, the GNSS receiver receives a GNSS signal and takes a snapshot for a period of time of the GNSS signal. A duration of a snapshot may range between tens to thousands of milliseconds. A duration of a snapshot may be adapted to requirements of signal accumulation given a current signal strength. The snapshot is down-converted to an intermediate frequency or a baseband frequency, and converted to digital signals for further digital signal processing. The digital signal processing may involve various procedures. For example, an initialization is performed to search and acquire the GNSS signal. After the initialization, a coarse estimation of delays and Doppler shifts of the GNSS signal is obtained. The GNSS receiver thus has a rough knowledge of a possible range of delays and Doppler shifts of the GNSS signal depending on the coarse estimation and experience. Subsequently, the GNSS receiver may require finer and more accurate estimation of delays and Doppler shifts of the GNSS signal for further applications such as positioning and navigation. The GNSS receiver may perform method 100 to obtain the accurate estimation using the individual snapshot.

In step 101 of method 100, the GNSS receiver obtains respective output sequences from $N$ correlators for the snapshot of the received GNSS signal.

In an example embodiment, the GNSS receiver has a plurality of correlators. A correlator performs correlation operations. For example, it computes inner product of two inputs. For performing step 101, the snapshot of the received GNSS signal is a first input of each correlator. The input snapshot may be a digital signal which is converted from the received analog signal and its frequency is converted to an intermediate band or a base band. The other input of each correlator is a pseudorandom noise, PRN, code sequence. The PRN code sequence is a known PRN code sequence that is used by the received GNSS signal. Each correlator is input with the same PRN code sequence with a different delay. A different delay is a different code phase of the same PRN code sequence. When the GNSS receiver uses $N$ correlators, the $N$ correlators apply the same PRN code sequence with $N$ respective delays to compute correlations with the snapshot.

The different delays applied by the correlators have finer ranges compared with those used in search and acquisition procedures for receiving GNSS signals. For example, the different delays applied by the correlators are selected within $\pm 1$ chip duration of the PRN code sequence used by the received GNSS signal. The different delays can be fractions of a chip duration of the PRN code sequence. Depending on PRN code sequences used in different GNSS systems, a chip duration is the reciprocal of the GNSS signal chipping rate with the example values 511 kHz (GLONASS L1), 1023 kHz (GPS L1C/A), or 10230 kHz (GPS L5). A spacing between different delays may be set to a same value, e.g., 1/8, 1/16 or 1/32 of a chip duration. For GPS L1C/A system, a correspondent spacing would be 122, 61 or 31 ns. Different delays can be calculated by using the spacing value and the chip duration. Thus, compared with signal acquisition which obtains a coarse delay range about $\pm 1$ chip duration, e.g., $\pm 1$ $\mu$s, delays used in step 101 have much finer ranges.

For computing correlations, the correlators perform correlation operations at discrete sampling time points. The sampling frequency used by the correlators may be much lower than the frequency of the input snapshot. For example, 1kHz of the correlators can be used for a 32MHz or a 64MHz signal, due to despreading. This allows subsequent processing of outputs of the correlators to be carried out by software implementations. By performing correlation operations at sampling time points, each correlator outputs a sequence of correlation values between the input snapshot and the PRN code sequence with a respective delay. For example, for the input snapshot, each correlator performs correlation operation at $K$ sampling time points during the period of the snapshot. Each output sequence thus has $K$ correlation values. Assuming that a sampling interval of each correlator is $T_S$, a sampling rate of each correlator is correspondingly $F_S = 1/T_S$, a duration of an input snapshot is $T$, the number of $K$ is then $T/T_S = T \cdot F_S$. As an example, a duration of an input snapshot may be 200ms, the correlators apply a sampling rate of 1kHz. There are thus 200 sample time points during the period of this snapshot. Each output sequence thus has 200 correlation values. The sampling rate may be smaller than 1kHz, such as 500Hz, or greater than 1kHz, such as 2kHz. A higher number of $K$ results in smaller spacing between frequency bins after DFT performed in step 102.

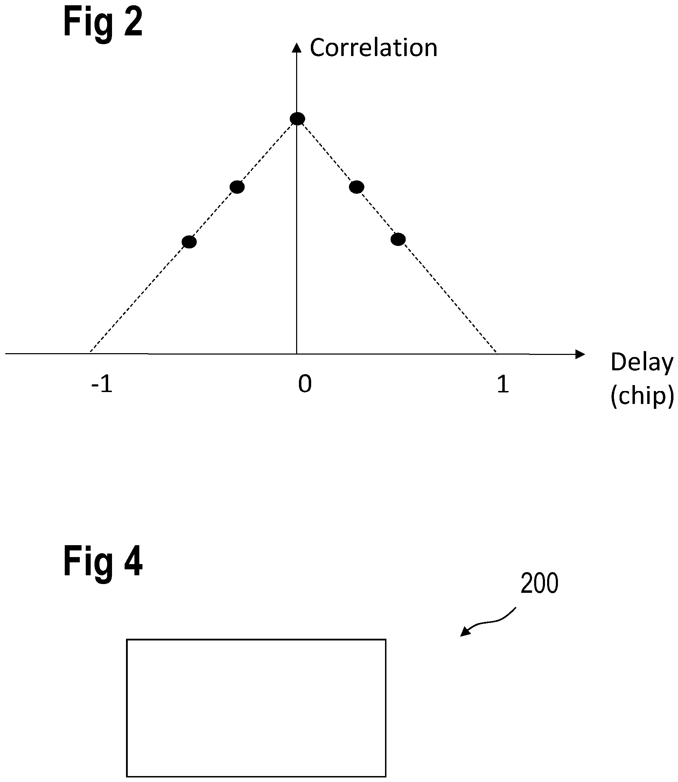

Figure 2 shows an example sequence of output correlation values. In this figure, five correlation values output by five correlators at a same sampling time point are shown. The five correlators apply different delays within $\pm 1$ chip duration of a received GNSS signal. Among the five correlators, the correlator applying a delay that is closest to the received GNSS signal outputs the highest correlation value, which is the peak in the figure. It thus can be seen that, the delay corresponding to the peak correlation value is closest to that of the received GNSS signal among all the delays applied by the correlators.

In Figure 2, the delays applied by the correlators are distributed within $\pm 1$ chip duration of the received GNSS signal with spacing between each other. A delay may be denoted as a delay tap, or a tap. A delay tap refers to a delay having one spacing value, two delay taps refer to a delay having two spacing values, and so on. In this way, $N$ different delays used by $N$ correlators can be conveniently represented by $N$ delay taps.

Referring back to Figure 1, in step 101, the GNSS receiver obtains respective output sequences from $N$ correlators for the snapshot of the received GNSS signal. Each output sequence has $K$ correlation values that are computed at $K$ sampling time points within the duration of the snapshot. The $N$ correlators apply a same PRN code sequence with $N$ respective delays, and the PRN code sequence is used by the received GNSS signal. The GNSS receiver thus obtains $N$ output sequences with $K$ values per sequence.

In some implementations, the values in the output sequences are complex values that have in-phase and quadrature components. For example, the snapshot input to the correlators contains complex values, and the correlators perform correlation operations with complex values.

In step 102 of method 100, the GNSS receiver obtains a respective frequency spectrum for each output sequence obtained in step 101 by computing a $K$-point DFT of the output sequence. As each output sequence has $K$ values in the time domain, a $K$-point DFT computation converts the sequence into a spectrum with $K$ frequency components in the frequency domain. The amplitudes in the spectrum reflect correlation at the frequency components. The GNSS receiver thus obtains $N$ frequency spectra with $K$ values per spectrum.

The frequency components are distributed in a frequency window with certain spacing values between each other. The frequency differences among the frequency components are considered as possible Doppler shifts in the received GNSS signal. The frequency differences may be denoted as frequency bins. One frequency bin refers to a frequency difference with one spacing value, two frequency bins refer to a frequency difference with two spacing values, and so on. In this way, frequency differences are conveniently represented by frequency bins.

In an example embodiment, parameters in the DFT computation can be configured to adjust the resulting frequency spectra.

For example, the chosen twiddle factors in DFT may impact the number of frequency bins and the resulting frequency window within which the frequency components are distributed. The number of frequency bins may be adjusted to be other than the number $K$ of the sampling times. In such implementations, a number $K'$ of frequency bins greater than $K$ can be obtained, and each of the frequency spectra thus contains $K'$ values. The frequency window is considered as a possible range to estimate Doppler shifts. The size of the frequency window would thus impact the possible range to estimate Doppler shifts. The frequency window is thus referred as a Doppler shift window. The Twiddle factors in DFT may be configured to adjust the size of the resulting frequency window.

Furthermore, different application scenarios of GNSS receivers, such as in automotive driving, aviation, or in wearable devices, may have different dynamics of movements, velocities, etc. Doppler shifts may have different dynamics in different application scenarios, and a possible range of Doppler shifts may vary in different application scenarios. Twiddle factors in DFT may be configured based on application scenarios.

In some implementations, the values in the frequency spectra are complex values that have in-phase and quadrature components. For example, the values in the sequences output from the correlators are complex values. The DFT computation is performed with complex values.

In step 103 of method 100, the GNSS receiver obtains a $N \times K$ matrix using the $N$ frequency spectra obtained in step 102.

In an example embodiment, the $N$ frequency spectra with $K$ values per spectrum may be directly represented as a $N \times K$ matrix for further processing. For example, values in the $N$ frequency spectra may be denoted as $z[n,k]$, which are represented as values in a two-dimensional matrix, $n \in [1,N]$, $k \in [1, K]$, wherein $n$ is an index of a frequency spectrum corresponding to a correlator and a delay tap, $k$ is an index of a frequency component corresponding to a frequency bin. A value in the matrix at $(n, k)$ is a value reflecting correlation at $n^{th}$ delay tap and $k^{th}$ frequency bin. When each frequency spectrum has $K'$ values as described in step 102, same implementations for $K$ can be applied to $K'$ and a matrix of $N \times K'$ is obtained for further processing.

In a further example embodiment, values in the $N$ frequency spectra are complex values that have in-phase and quadrature components. The complex values may be processed to obtain a real-valued $N \times K$ matrix for further processing. For example, each complex value $z[n,k]$ is converted to its absolute value $|z[n, k]|$. The $N \times K$ matrix then contains only real values, which are the absolute values of the $N$ frequency spectra. Alternatively, each complex value is processed using a reference value.

The reference value may be selected based on absolute values of the complex values in the $N$ frequency spectra. For example, the reference value is selected to be the one which has the largest absolute value in the $N$ frequency spectra. Alternatively, a subset of values which have absolute values higher than a threshold is selected from values in the $N$ frequency spectra. The reference value is selected from the subset to be the one which corresponds to the smallest delay in the subset, that is, the one corresponds to the smallest delay tap. In either example, the selected reference value can be denoted as $z_{ref}$, and its index can be denoted as $(n_{ref}, k_{ref})$.

Each complex value in the $N$ frequency spectra can be processed using the selected reference value and the $N \times K$ matrix can be obtained to contain the processed values. For example, a unit complex value $u$ of the selected reference value $z_{ref}$ may be computed by:

$$u = \frac{z_{ref}}{\left| z_{ref} \right|} \ ,$$

wherein $|z_{ref}|$ is an absolute value of $z_{ref}$. Afterwards, each complex value $z[n,k]$ is converted to be the in-phase component of a multiplication of $(z[n,k]u^*)$, wherein $u^*$ is a complex conjugate of the unit complex value $u$. In multipath scenarios which are common for GNSS systems, the selected reference value is considered corresponding to a LOS component in the GNSS signal. By the above computation using the unit complex value $u$ of the reference value, phases of the complex values are adjusted by using the phase of the reference value. NLOS components in the GNSS signal can be largely removed. Subsequent estimation using the adjusted values is more accurate. Furthermore, this enlarges the linear region of the correlation function in the case of GNSS signals that use BOC modulation, thus alleviating problems the BOG correlation side peaks may cause during estimation.

After this processing, each $z[n,k]$ is processed and converted to a real value and the real value is put in the $N \times K$ matrix at its correspondent index $(n, k)$. The $N \times K$ matrix then contains only real values, which are the in-phase components of the multiplications. The real-valued $N \times K$ matrix is used in further processing steps.

In step 104 of method 100, the GNSS receiver determines at least one peak value in the $N \times K$ matrix obtained in step 103 for estimation of delays and Doppler shift. For example, a peak value may be a peak in a fitted curve or graph using the $N \times K$ matrix. Determining the at least one peak value depends on which approach is applied in step 105 for estimation of delays and Doppler shifts.

In step 105 of method 100, the GNSS receiver estimates a delay and a Doppler shift of the received GNSS signal using indices of the at least one peak value in the $N \times K$ matrix obtained in previous steps.

In an example embodiment, the delay and the Doppler shift are estimated separately while both using the reference value $z_{ref}$ and its index $(n_{ref}, k_{ref})$ as described above. The reference value may be selected using any implementation as described above in step 103.

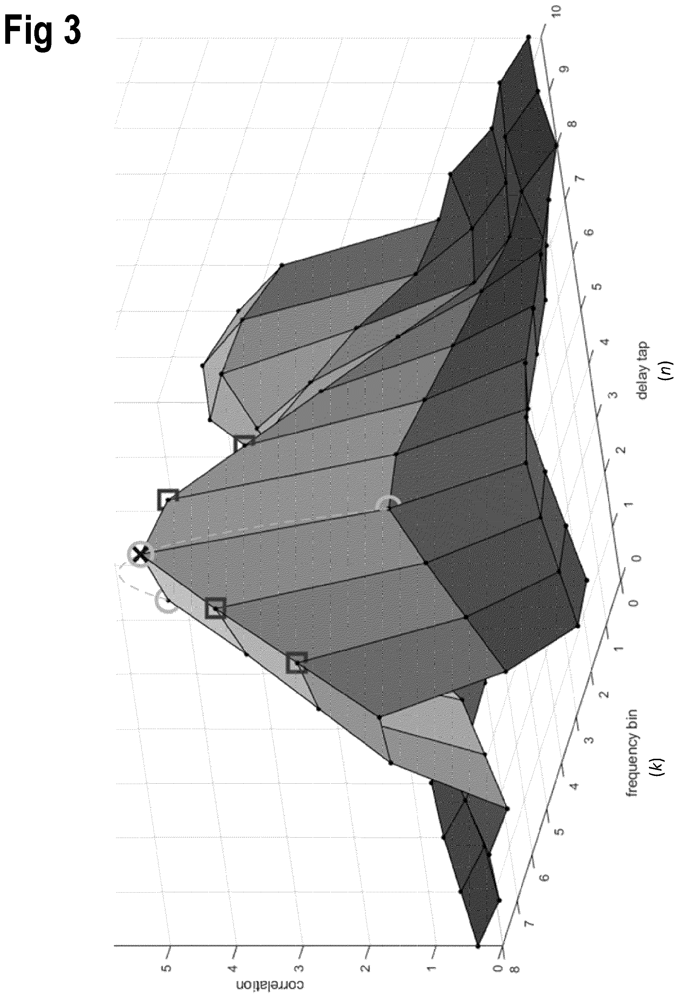

Figure 3 shows an example illustrating values in a two-dimensional matrix. Real values in a $N \times K$ matrix are depicted at their respective indices $(n, k)$. One axis in the figure is in a delay dimension, and each index $n$ is shown in the axis of the delay dimension. As described above, different delays used by the $N$ correlators can be represented by different delay taps. An index $n$ corresponds to a delay tap and thus corresponds to a delay value used by a correlator. Another axis in the figure is in a frequency dimension, and each index $k$ is shown in the axis of the frequency dimension. As described above, frequency differences can be represented by frequency bins. An index $k$ corresponds to a frequency bin and thus corresponds to a frequency difference. The frequency dimension may be also referred as a Doppler shift dimension, as the frequency differences may be possible Doppler shifts. Values in the matrix are depicted as amplitudes at $(n, k)$ in the figure. The amplitudes reflect correlation at $n^{th}$ delay tap and $k^{th}$ frequency bin.

In the example shown in Figure 3, the value at (3,3) marked with a cross is shown as a selected reference value. The reference value may be selected as described above in step 103. The reference value may be used for estimating the delay and the Doppler shift separately.

Referring back to Figure 1, for estimating the delay, a first subset of values in the matrix is selected. The first subset comprises the values having a same index $k_{ref}$ of the reference value $z_{ref}$. The first subset thus comprises values $z[n,k]$ at index $k = k_{ref}$ and $n \in [1, N]$. These values in the first subset correspond to different delay taps at a same frequency bin. In the example shown in Figure 3, a first subset of values at $k = 3$, such as (2,3), (3,3) and (4,3) marked in squares, may be selected.

Using values in the first subset, a code phase discriminator is applied to compute the delay. For example, an early-late-gate discriminator may be used as defined in the following:

$$\widehat{D} = G \cdot \left( z\left[ n_{ref} + 1, k_{ref} \right] - z\left[ n_{ref} - 1, k_{ref} \right] \right),$$

or a double-delta multi-gate discriminator may be used as defined in the following:

$$\widehat{D} = G \cdot \left( z\left[ n_{ref} + 1, k_{ref} \right] - z\left[ n_{ref} - 1, k_{ref} \right] - \left( z\left[ n_{ref} + 2, k_{ref} \right] - z\left[ n_{ref} - 2, k_{ref} \right] \right) / 2 \right),$$

wherein G is a gain factor that is tuned to the modulation used in the GNSS signal. For example, G needs to be larger for BOC modulated Galileo E1 signals than for binary phase shift keying, BPSK, modulated GPS L1C/A signals. The code phase discriminator outputs the estimated delay. Different types of code phase discriminators may be applied to compute the delay.

In an example embodiment, the delay is estimated separately based on an early-late gate discriminator $D$ that is the difference between the matrix values at $(n_{ref} - 1, k_{ref})$ and at $(n_{ref} + 1, k_{ref})$, and the estimated delay in relation to $n_{ref}$ is then computed as $D \cdot T_{chip}/A_{ref}$ where $T_{chip}$ is the chip duration of the GNSS signal and $A_{ref}$ is the matrix value at $(n_{ref}, k_{ref})$.

In an example embodiment, the delay is estimated separately based on a multi-gate discriminator value $D_0$ computed from taps $(n_{ref} + x, k_{ref})$ neighboring the reference tap $n_{ref}$, e.g. the double delta discriminator computed for $x \in$ {-2, -1,1,2}, to then compute the estimated delay as $g^{-1}(D_0)$ where the function $g$ is a pre-trained non-linearity reflecting discriminator value $D_0$ versus delay for the given signal modulation and signal bandwidth.

In an example embodiment, the delay is estimated separately based on three multi-gate discriminator values $D_{-1}$, $D_0, D_1$, e.g. of the double delta kind, computed in reference to the matrix values neighboring $(n_{ref} - 1, k_{ref})$, $(n_{ref}, k_{ref})$, $(n_{ref} + 1, k_{ref})$, respectively, and by then computing the estimated delay with linear interpolation at the position of the zero-crossing between either $D_{-1}, D_0$ or $D_0, D_1$, depending on which pair of $D_{-1}, D_0, D_1$ exhibits opposite signs.

For estimating the Doppler shift, a second subset of values in the matrix is selected. The second subset comprises the values having a same index $n_{ref}$ of the reference value $z_{ref}$. The second subset thus comprises values $z[n, k]$ at index $n = n_{ref}$ and $k \in [1, K]$. These values in the second subset correspond to different frequency bins at a same delay tap. In the example shown in Figure 3, a second subset of values at $n = 3$, such as (3,2), (3,3) and (3,4) marked in circles, etc., may be selected.

Using values in the second subset, a curve can be fitted and a peak can be found on the fitted curve. The frequency value corresponding to the position of the peak at the axis of the Doppler shift dimension is the estimated Doppler shift. For example, the Doppler shift is estimated separately, in relation to the frequency associated with $k_{ref}$, based on the calculated position of the peak of a parabola fitted through the matrix values at $(n_{ref}, k_{ref} - 1)$, $(n_{ref}, k_{ref})$, and $(n_{ref}, k_{ref} + 1)$.in the example shown in Figure 3, a dotted line is shown which is a curve fitted to values at (3,2), (3,3) and (3,4). A peak can be found on the dotted curve. The peak is at a position between frequency bin 3 and 4 in the Doppler shift dimension. The frequency value corresponding to the precise position in the Doppler shift dimension is the estimated Doppler shift.

In another example embodiment, the delay and the Doppler shift are estimated together by using a two-dimensional fitting algorithm. Values in the two-dimensional $N \times K$ matrix are partially or completely fitted to a graph using a two-dimensional fitting algorithm. For example, values in the two-dimensional $N \times K$ matrix are amplitudes of a three-dimensional graph to be fitted to. Similar as in Figure 3, two dimensions of the graph are the delay dimension and the Doppler shift dimension of the $N \times K$ matrix, where the values in the matrix are positioned in the graph. The values are in the third dimension of the graph as amplitudes to be fitted to (the fitted graph is shown in Figure 3). A multitude of known suitable two-dimensional fitting algorithm may be used. A peak is found in the fitted graph. The precise position of the peak in the delay dimension is the estimated delay and the precise position of the peak in the Doppler shift dimension is the estimated Doppler shift.

In some implementations, a Doppler shift window of $\pm a$ Hz and/or a delay window of $\pm b$ nanoseconds is considered for estimating the delay and the Doppler shift of the received GNSS signal, wherein $a$ is smaller than 1000, $b$ is smaller than 1000. For example, a Doppler shift window may be $\pm 4$ Hz, and/or a delay window may be $\pm 0.5$ chip duration, which may be roughly $\pm 146$ ns. Estimated delays in such windows would result in accurate pseudoranges calculated using the estimated delays. For example, a window of calculated pseudoranges may be $\pm 9$ meters in a GPS L1 system, or $\pm 2$ meters in a GPS L5 system. As further examples, $a$ may be smaller than 800, 500, 200, 100, 50, or as low as 5, $b$ may be smaller than 800, 500, 200, or as low as 100. Parameters in the DFT computation in step 102 can be set to adjust the Doppler shift window. Delays applied in the correlators can be set to adjust the delay window.

In some implementations, after step 105 when the estimated delay and the Doppler shift are obtained, the GNSS receiver may use the estimation to correct parameters of a delay and a frequency of the received GNSS signal. The GNSS receiver may apply the corrected parameters to a local oscillator for tracking the GNSS signal. The corrected parameters may be further used for navigation, e.g., by a navigation engine.

In some implementations, after step 105, method 100 may be performed continuously, such that the method starts over with step 101 to process further snapshots when snapshots are taken continuously. In some implementations, after step 105, the GNSS receiver may reduce energy consumption for a period of time and do not take continuous snapshots. For example, the GNSS receiver may reduce energy consumption by shutting down some processing and/or receiving modules or functionalities. Snapshots of a GNSS signal are not taken continuously but with time intervals. For example, in an operation cycle, the GNSS receiver may receive and take a snapshot of a GNSS signal for a partial time in the cycle, process the snapshot and estimate delays and Doppler shifts by performing method 100, and does not take further snapshot in the rest of the cycle. For example, a cycle may be preset as 1 second and a duty cycle which is a ratio of time in the complete cycle with full operation of the GNSS receiver may be preset as 20%. The duration of a snapshot may be the same as the length of a duty cycle. In this case, the GNSS receiver may process a snapshot of 200ms using method 100, and may not perform any receiving and processing for 800ms. A duration of a duty cycle and correspondently a duration of a snapshot may be adapted to requirements of signal accumulation given a current signal strength. Better power saving is achieved at the GNSS receiver by using a smaller duty cycle.

As further examples, a cycle may be set to a few seconds. The cycle may be below 1 second, such as hundreds of milliseconds. The cycle may be below 500ms, such as 400ms or 200ms. A duty cycle is a part of the cycle, such as 90% or 80% of the cycle. A duty cycle may be set as low as 20%, 10%, 2% or 1% of the cycle. The length of a duty cycle may be between 20ms to 2 seconds. Correspondently, the duration of a snapshot, which has a same length of a duty cycle, may be a few seconds such as 2 seconds. The duration of a snapshot may be set below 2 seconds, below 1 second, below 500ms, below 200ms, or below 100ms. The duration of a snapshot may be set as low as 500ms, 200ms, 100ms, 50ms or 20ms.

Figure 4 shows an example of a module 200 for estimating delays and Doppler shifts of GNSS signals. Module 200 can be configured to perform the various implementations of method 100 as described above. In some implementations, module 200 may be a single module or more modules may be implemented to perform method 100. Module 200 may be implemented in software and/or hardware. For example, module 200 may be configured to be connected with correlators, the correlators may be implemented in hardware, and module 200 may be completely implemented in software to perform any further processing in method 100 including steps 101-105 from obtaining output sequences. Module 200 may be comprised in GNSS receiving modules, implemented in a GNSS receiver or in a terminal device with GNSS receiving modules.

Further implementations of module 200 become readily apparent from the various implementations described above in conjunction with the method 100.

In some implementations, a terminal device comprising module 200 may be implemented to perform method 100. Further implementations of the terminal device become readily apparent from the various implementations described above in conjunction with the method 100.

Hence, with the various implementations described above for the improved estimation of delays and Doppler shifts of GNSS signals, an individual snapshot of a GNSS signal is processed to achieve accurate estimation of delays and Doppler shifts. Continuous snapshots of GNSS signals are no longer required, which allows power saving of GNSS receivers.

Various embodiments of the improved processing concept for estimating delays and Doppler shifts of GNSS signals can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved processing concept. The logic may form part of a computer program product adapted to direct an information-processing device to automatically perform a set of steps disclosed in embodiments of the improved processing concept.

The specification and drawings are, accordingly, to be regarded in an illustrative rather than a restrictive sense. However, it will be evident that various modifications and changes may be made thereunto without departing from the scope of the invention as set forth in the claims.

LIST OF REFERENCE SIGNS

| | |
|---|---|
| 100 | method |
| 101-105 | steps |
| 200 | module |

**Claims**

1. A method for estimating delays and Doppler shifts of global navigation satellite system, GNSS, signals, the method comprising:

    - obtaining respective output sequences from $N$ correlators for a snapshot of a received GNSS signal, wherein each sequence has $K$ values, and the $N$ correlators correspond to $N$ different delays of a pseudorandom noise, PRN, code sequence, $N$ and $K$ being positive integers;
    - for each output sequence, obtaining a frequency spectrum by computing a $K$-point discrete Fourier transform of the output sequence;
    - obtaining a $N \times K$ matrix using the $N$ frequency spectra;
    - determining at least one peak value in the $N \times K$ matrix; and
    - estimating a delay and a Doppler shift of the received GNSS signal using indices of the at least one peak value in the $N \times K$ matrix.

2. The method according to claim 1, further comprising selecting a reference value based on absolute values in the $N \times K$ matrix, wherein selecting the reference value comprises selecting a value as the reference value which has the largest absolute value in the $N \times K$ matrix.

3. The method according to claim 1, further comprising selecting a reference value based on absolute values in the $N \times K$ matrix, wherein selecting the reference value comprises selecting a subset of values in the $N \times K$ matrix having absolute values higher than a threshold, and selecting the value as the reference value which corresponds to the smallest delay in the subset.

4. The method according to any of claims 1 to 3, wherein indices of a value in the $N \times K$ matrix is denoted as $(n, k)$, $n \in [1, N]$, $k \in [1, K]$, and estimating the delay and the Doppler shift of the received GNSS signal using indices of at least one peak value in the $N \times K$ matrix comprises:

   - computing the delay by a code phase discriminator using a subset of values in the matrix, wherein the subset comprises the values having a same index $k$ of a reference value selected based on absolute values in the $N \times K$ matrix ; and
   - fitting a subset of values in the matrix to a polynomial curve and computing the Doppler shift at a maximum of the curve, wherein the subset comprises the values having a same index $n$ of the reference value.

5. The method according to any of claims 1 to 3, wherein estimating the delay and the Doppler shift of the received GNSS signal using indices of the at least one peak value in the $N \times K$ matrix comprises:

   - fitting, partially or completely, the values in the $N \times K$ matrix to a graph in a delay dimension and a Doppler shift dimension using a two-dimensional fitting algorithm; and
   - computing the delay and the Doppler shift at a peak in the graph.

6. The method according to any of claims 1 to 5, wherein values in the $N$ frequency spectra are denoted as $z[n,k]$ and have in-phase and quadrature components, $n \in [1, N]$, $k \in [1, K]$, and obtaining the $N \times K$ matrix comprises:

   - computing a unit complex value $u$ of a reference value $z_{ref}$ selected based on absolute values in the $N \times K$ matrix, wherein $u$ is computed by:

$$u = \frac{z_{ref}}{\left| z_{ref} \right|} \; ,$$

   wherein $|z_{ref}|$ is an absolute value of $z_{ref}$; and
   - converting each $z[n,k]$ to be the in-phase component of a multiplication of $(z[n, k]u^*)$, wherein $u^*$ is a complex conjugate of the unit complex value $u$.

7. The method according to any of claims 1 to 5, wherein values in the $N$ frequency spectra have in-phase and quadrature components, and obtaining the $N \times K$ matrix comprises converting the values into absolute values.

8. The method according to any of claims 1 to 7, wherein obtaining the frequency spectrum for each output sequence comprises configuring twiddle factors for the $K$-point discrete Fourier transform to adjust the frequency spectrum.

9. The method according to any of claims 1 to 8, further comprising correcting parameters of a delay and a frequency of the received GNSS signal by using the estimated delay and the estimated Doppler shift and applying the parameters to a local oscillator for tracking the GNSS signal.

10. The method according to any of claims 1 to 9 further comprising performing by each correlator a correlation operation to generate the respective output sequence, wherein each value in the output sequence is computed by the correlation operation between the snapshot and the PRN code sequence with the correspondent delay of the correlator at a sampling time point.

11. The method according to any of claims 1 to 10 further comprising taking and processing a snapshot of the received GNSS signal at predetermined duty cycle of a cycle, wherein the cycle is below one second or is a few seconds, and the snapshot and the duty cycle are set to at least one of:

- a duration of the snapshot duration is 200ms;
- the duty cycle is between 2% and 20% of the cycle;
- the duty cycle is between 20ms and 500ms.

12. The method according to any of claims 1 to 11, wherein a Doppler shift window of $\pm a$ Hz and a delay window of $\pm b$ nanoseconds are considered for estimating the delay and the Doppler shift of the received GNSS signal, and the Doppler shift window, the delay window, the $N$ correlators and the $N$ different delays are set to at least one of:

   - $a$ is smaller than 1000;
   - $b$ is smaller than 2000;
   - the $N$ different delays are fractions of a chip duration of the GNSS signal; and
   - the $N$ correlators use a sampling rate of 1kHz for the snapshot to obtain the $K$ values per correlator.

13. A module for processing global navigation satellite system, GNSS, signals configured to perform a method according to any one of claims 1 to 12.

14. A terminal device comprising a module according to claim 13.

15. A computer program product comprising instructions which, when executed on one or more processors of a device having a hardware module, cause the one or more processors to perform a method according to any one of claims 1 to 12.

# Fig 1

**Fig 2**

**Fig 4**

**Fig 3**

Europäisches
Patentamt
European
Patent Office
Office européen
des brevets

# EUROPEAN SEARCH REPORT

**Application Number**

EP 24 20 0273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/199812 A1 (CHENG ZHENLAN [CH] ET AL) 1 July 2021 (2021-07-01)<br>* paragraph [0016] - paragraph [0021] *<br>* paragraph [0045] - paragraph [0055] *<br>* paragraph [0065] - paragraph [0079] *<br>* figures 1-5 *<br>* abstract *<br>----- | 1-15 | INV.<br>G01S19/30<br>G01S19/34 |
| A | CN 115 267 860 A (PEOPLE'S LIBERATION ARMY NATIONAL UNIVERSITY OF DEFENSE TECHNOLOGY) 1 November 2022 (2022-11-01)<br>* paragraph [0004] - paragraph [0015] *<br>* paragraph [0018] - paragraph [0039] *<br>* claims 1-10 *<br>* figures 1-5 *<br>----- | 1-15 | |
| A | US 7 388 541 B1 (YANG CHUN [US]) 17 June 2008 (2008-06-17)<br>* the whole document *<br>----- | 1-15 | |

|  |
|---|
| TECHNICAL FIELDS SEARCHED (IPC) |
| G01S |

The present search report has been drawn up for all claims

| Place of search | Date of completion of the search | Examiner |
|---|---|---|
| Munich | 12 February 2025 | Galmiche, Aurélien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0273

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | | Publication date |
|---|---|---|---|---|
| US 2021199812 A1 | 01-07-2021 | CN | 112166346 A | 01-01-2021 |
| | | EP | 3785050 A1 | 03-03-2021 |
| | | US | 2021199812 A1 | 01-07-2021 |
| | | WO | 2019219218 A1 | 21-11-2019 |
| CN 115267860 A | 01-11-2022 | NONE | | |
| US 7388541 B1 | 17-06-2008 | US | 7388541 B1 | 17-06-2008 |
| | | US | 7471241 B1 | 30-12-2008 |

EPO FORM P0459

For more details about this annex : see Official Journal of the European Patent Office, No. 12/82